Europäisches Patentamt

European Patent Office

Office européen des brevets

(11) Veröffentlichungsnummer: **0 004 678**
A1

(12) **EUROPÄISCHE PATENTANMELDUNG**

(21) Anmeldenummer: 79101095.2

(22) Anmeldetag: 10.04.79

(51) Int. Cl.²: **B 29 C 1/02**

(30) Priorität: 12.04.78 AT 2553/78

(43) Veröffentlichungstag der Anmeldung:
17.10.79 Patentblatt 79/21

(84) Benannte Vertragsstaaten:
CH DE FR GB IT SE

(71) Anmelder: ISOVOLTA-THERMAX-Brandschutzsysteme
-Vertriebs-GmbH
Marschnerstrasse 17a
D-8000 München 60(DE)

(72) Erfinder: Pflug, Günther, Dr.
Paniglgasse 24
A-1040 Wien(AT)

(72) Erfinder: Penicka, Ferdinand
Deinhardsteingasse 11/15
A-1160 Wien(AT)

(72) Erfinder: Petershofer, Georg, Dr.
Hauptstrasse 26
A-2351 Wiener Neudorf(AT)

(54) Verfahren zum Herstellen einer Matrize zum Abformen von reliefartig strukturierten Oberflächen beim Verpressen plattenförmiger Gegenstände.

(57) Bei einem Verfahren zum Herstellen einer Matrize, die zum Abformen von reliefartig strukturierten Oberflächen beim Verpressen plattenförmiger Gegenstände, insbesondere beim Heiß-Verpressen von Kunstharz-Schichtpreßstoffplatten dient, wird zwischen einer elektrisch leitenden, insbesondere metallischen Folie und einer elektrisch leitenden, flächigen Struktur, die eine insbesondere metallische Folie, Platte oder ein metallisches Netz sein kann, eine Schicht gebildet, die eine heiß aushärtbare Bindemittelzubereitung und ein elektrisch leitendes Material enthält. Ein diesen Schichtaufbau aufweisender Verbund wird danach zwischen zwei Preßoberflächen, von denen zumindest eine die abzuformende releifartige Oberflächenstruktur aufweist, heiß verpreßt und ausgehärtet, wobei die Folien und die darunter liegenden Schichtbereiche die gewünschte Oberflächenstruktur aufgeprägt bekommen und die einzelnen Bestandteile des so verpreßten Verbundes sich vermöge der aushärtenden Bindemittelzubereitung miteinander zur Rohmatrize verbinden, welche als Ganzes eine gute elektrische und thermische Leitfähigkeit aufweist. Diese Rohmatrize wird hernach auf galvanischem Wege mit einem Metallüberzug, insbesondere einem Chromüberzug, versehen.

Verfahren zum Herstellen einer Matrize zum Abformen von reliefartig strukturierten Oberflächen beim Verpressen plattenförmiger Gegenstände.

Die Erfindung betrifft ein Verfahren zum Herstellen einer Matrize, die zum Abformen von reliefartig strukturierten Oberflächen beim Verpressen plattenförmiger Gegenstände, insbesondere beim Heiß-Verpressen von Kunstharz-Schichtpreßstoffplatten dient, bei welchem Verfahren ein flächenhaft ausgedehnter, ein duroplastisches Bindemittel im B-Zustand enthaltender Träger zwischen zwei Preßoberflächen heiß verpreßt und ausgehärtet wird, wobei zumindest eine der Preßoberflächen die Form der abzuformenden reliefartigen Oberflächenstruktur aufweist.

Bekannte Matrizen dieser Art werden nun so hergestellt, daß man mit Duroplasten, wie z.B. Phenol- oder Epoxydharzen imprägnierte Papiere in Kontakt mit der Urform der abzubildenden Oberflächenstruktur, z.B. also der Porenoberfläche einer Edelholzfurnier oder der eines Gewebes oder dgl., oder mit einer Preßplatte, die eine dieser Urform entsprechende Oberflächenstruktur aufweist, heiß verpreßt, wodurch die Oberfläche des Preßlings die Negativform dieser Strukturform annimmt. Solche Matrizen ersetzen z.B. bei der Herstellung von dekorativen Kunstharz-Schichtpreßstoffplatten vielfach Preßbleche mit entsprechend reliefartig strukturierten Preßflächen, deren Herstellung aber sehr aufwendig und teuer ist und deren Preßflächen im Betrieb sehr sorgfältig vor Beschädigungen geschützt werden müssen.

Gegenüber solchen Preßblechen haben die genannten bekannten Matrizen den Nachteil, daß z.B. beim Preßvorgang bei der Schichtpreßstoffplattenherstellung zwischen rel .fartig

0004678

strukturierten Matrizenoberflächen und dem Preßling eine Trennfolie eingelegt werden muß, um ein Ankleben der aushärtenden Melaminharzoberfläche der Schichtpreßstoffplatte an der Matrizenoberfläche zu vermeiden und - wegen der zunehmenden Abnützung der Matrizenoberfläche mit steigender Anzahl der Pressungen - eine im wesentlichen immer gleichmäßige Oberflächengüte der erzeugten Schichtpreßstoffplatten zu ermöglichen. Diese Trennfolie besteht dabei z.B. aus einem sogenannten Alupapier, das ist eine auf einer Seite mit einer Trennmittelschicht versehene und auf der anderen Seite mit einem Spezialpapierträger verleimte ca. 9 bis 12 $\mu$m starke Aluminium- folie, die trennmittelseitig der zu verpressenden Schichtpreßstoffplatte zugewandt ist. Nach dem Preßvorgang wird diese Trennfolie von der Oberfläche der Schichtpreßstoffplatte abgezogen und kann noch ein- oder zweimal wiederverwendet werden.

Der durch den Einsatz von Trennfolien entstehende zusätzliche Aufwand macht den Kostenvorteil, welcher bei der Verwendung solcher Matrizen gegenüber der von Preßblechen besteht, nun aber teilweise wieder zunichte. Außerdem haben diese Matrizen gegenüber Preßblechen eine geringere Wärmeleitfähigkeit, was den Wärmedurchgang beim Preßvorgang behindert und dazu führt, daß die Anzahl der in einer Mehr- etagenpresse pro Preßtage herstellbaren Schichtpreßstoff- platten beim Einsatz solcher Matrizen kleiner ist als bei der Verwendung von Preßblechen.

Hier will die Erfindung Abhilfe schaffen. Die Erfindung, wie sie in den Ansprüchen gekennzeichnet ist, löst die Aufgabe, ein Verfahren zum Herstellen einer Matrize, die zum Abformen von reliefartig strukturierten Oberflächen beim Verpressen von plattenförmigen Gegenständen, insbesondere beim Heiß-Verpressen von Kunstharz-Schichtpreßstoffplatten dient, anzugeben, wobei dieses Verfahren von von der an sich bekannten Art sein soll, bei welchem ein flächenhaft ausgedehnter, ein duroplastisches Bindemittel im B-Zustand enthaltender Träger zwischen zwei Preßoberflächen heiß verpreßt und ausgehärtet wird, wobei zumindest eine der Preßoberflächen die Form der abzuformenden reliefartigen Oberflächenstruktur aufweist und wobei bei der Verwendung der erzeugten Matrize im Gegensatz zu den Gegebenheiten bei den bekannten Matrizen dieser Art der Einsatz von Trennfolien überflüssig werden soll.

Die durch die Erfindung erreichten Vorteile bestehen darüber hinaus darin, daß die erfindungsgemäß hergestellthen Matrizen eine erhöhte Wärmeleitfähigkeit aufweisen und damit das Verpressen einer ähnlich hohen Anzahl von Schichtpreßstoffplatten pro Preßtage ermöglichen wie beim Einsatz von Preßblechen und ihre in Preßzahlen ausgedrückte Lebensdauer ferner ebenso hoch liegt wie bei diesem.

Im folgenden werden zwei unterschiedliche Ausführungswege der Erfindung anhand von zwei Beispielen erläutert.

B e i s p i e l    1:

Für die Erzeugung der Dauermatrize stellt man zunächst ein Sinterpulvergemenge her, bestehend aus:

  1 Gew.Teil Epoxy-Sinterpulver der Type  "Drylac"
       der Firma Tiegerlacke, Wels;
1,2 Gew.Teile Eisenpulver der Type W 100.25  der
       Firma  VÖEST, Linz.

Auf ein geschliffenes Aluminiumblech von 1,2 mm Stärke und dem gleichen Flächenausmaß wie die herzustellende Matrize wird nun zuerst auf der einen und dann auf der anderen Frontseite jeweils mittels einer Rakel eine 0,4 mm starke Schicht aus diesem Sinterpulvergemenge aufgebracht und diese darauf durch kurzzeitige Erhitzung mittels Infrarotstrahlen auf das Aluminiumblech aufgeschmolzen. Jede der so aufgeschmolzenen Schichten wird nun mit einer Kupferfolie von 35 µm Stärke abgedeckt und das Ganze dann gemeinsam mit zwei an den Kupferfolien anliegenden Gewebestücken, welche die Urformen der abzubildenden reliefartigen Oberflächenstrukturen darstellen, in eine Presse verbracht und bei 900 N/cm$^2$ und einer Preßplattentemperatur von 160$^o$C während 10 min. verpreßt, wobei die Kupferfolien und die darunterliegenden Bereiche der angeschmolzenen Sinterpulverschichten eine der Struktur des anliegenden Gewebes entsprechende reliefartige Oberflächenstruktur aufgeprägt bekommen und sich die Sinterpulverschichten unter Aushärtung ihrer Bindemittelanteile mit dem Aluminiumblech und der jeweils anliegenden Kupferfolie innig verbinden.

Der der Presse entnommene und abgekühlte Preßling bildet nun bereits die an beiden Frontseiten mit der gewünschten Oberflächenstruktur versehene Rohmatrize, welche aufgrund des Eisenpulvergehaltes in ihren Sinterschichten als Ganzes eine hohe thermische bzw. elektrische Leitfähigkeit aufweist. Die Fertigstellung der Matrize erfolgt nun durch Aufbringen einer Hartchromschicht von 2 µm Stärke auf galvanischem Wege auf die Frontflächen der Rohmatrize, was wegen deren hohen elektrischen Leitfähigkeit keine Schwierigkeiten bereitet.

B e i s p i e l 2:
Für die Matrizenherstellung wird ein lösungsmittelfreies härtbares Gemenge vorbereitet, bestehend aus:
    100 Gew.Teilen Epoxydharz der Type LV 556,
    23 Gew.Teilen Härter der Type HV 994,
        beides von der Firma Ciba, Basel, und

    200 Gew.Teilen Eisenpulver der Type C 100.29
        der Firma VÖEST, Linz.

0004678

Auf eine mit einer Polyäthylenfolie überzogene ebene
Unterlage  wird ein feinmaschiges Kupferdrahtnetz von
0,6 mm Stärke und dem gleichen Flächenausmaß wie die
herzustellende Matrize aufgespannt, auf dieses Drahtnetz
das härtbare Gemenge aufgegossen, mittels einer Rakel
auf eine gleichmäßige Schicht einer Stärke von 0,3 mm
verteilt und diese Schicht durch kurze Einwirkung von
Infrarotstrahlen vorgehärtet.  Das beschichtete Drahtnetz
wird dann von der Unterlage abgenommen und auf seiner
Rückseite nun auf dieselbe Weise ebenfalls mit einer
Gemengeschicht versehen und vorgehärtet.

So wie nach Beispiel 1 werden nun die auf beiden Seiten
des Drahtnetzes aufgebrachten Gemengeschichten mit Kupferfolien von 17.5 µm Stärke abgedeckt, nun aber gemeinsam
mit zwei an  den Kupferfolien anliegenden Holzfurnierblättern auf dieselbe Weise wie nach Beispiel 1 verpreßt.
die so erhaltene Rohmatrize, die jetzt zu beiden Seiten
als reliefartige Oberflächenstruktur die Negativform der
Holzmaserung der Holzfurnierblätter aufweist, wird nun
noch zur Fertigstellung der Matrize vernickelt und  anschließend verchromt.

0004678

Patentansprüche:

1. Verfahren zum Herstellen einer Matrize zum Abformen von reliefartig strukturierten Oberflächen beim Heißpressen plattenförmiger Gegenstände, insbesondere beim Heißpressen von Kunstharz-Schichtpreßstoffplatten, bei welchem ein flächenhaft ausgedehnter, ein duroplastisches Bindemittel im B-Zustand enthaltender Träger zwischen zwei Preßoberflächen heiß verpreßt und ausgehärtet wird, wobei zumindest eine der Preßoberflächen die Form der abzubildenden reliefartigen Oberflächenstruktur aufweist, dadurch gekennzeichnet, daß zur Herstellung des das Bindemittel enthaltenden Trägers jeweils zwischen einer elektrisch leitenden Folie und einer elektrisch leitenden flächigen Struktur, die gegebenenfalls eine Folie, Platte oder ein Netz sein kann, eine verformbare Schicht gebildet wird, welche eine Bindemittelzubereitung, die gegebenenfalls beim Heiß-Aushärten zumindest nahezu keine Gase oder Dämpfe abgibt, sowie ein elektrisch leitfähiges Material enthält, daß das Ganze danach in an sich bekannter Weise zwischen zwei Preßoberflächen, von denen zumindest eine die abzuformende reliefartige Oberflächenstruktur aufweist, heiß verpreßt und ausgehärtet wird, wobei die Folien und die darunter liegenden Schichtbereiche die gewünschte Oberflächenstruktur aufgeprägt bekommen und die Folien, Platten, Netze oder sonstigen elektrisch leitenden flächigen Strukturen sich mit dem aushärtenden Bindemittel verbinden und daß schließlich die so hergestellte Rohmatrize zumindest an den reliefartig strukturierten Oberflächen auf galvanischem Wege, gegebenenfalls durch Vernickeln und/oder Verchromen mit einem Metallüberzug versehen wird.

2. Verfahren nach Anspruch 1, dadurch gekennzeichnet, daß zur Herstellung des das Bindemittel enthaltenden Trägers die Bindemittelzubereitung mit dem elektrisch leitfähigen Material vermengt und dieses Gemenge in Form einer gleichmäßigen Schicht auf eine flächige Basis aufgebracht und daß diese so gebildete verformbare Schicht mit einer der elektrisch leitenden Folien abgedeckt wird.

3. Verfahren nach Anspruch 2, dadurch gekennzeichnet,daß als flächige Basis, auf die das Gemenge aufgebracht wird, eine der elektrisch leitenden Folien, Platten, Netze oder sonstigen flächigen Strukturen eingesetzt wird.

4. Verfahren nach Anspruch 2 oder 3, dadurch gekennzeichnet, daß die Gemengeschicht auf der flächigen Basis durch Zufuhr von Wärme angeschmolzen und/oder angesintert und/oder angetrocknet und ihr Bindemittelanteil gegebenenfalls in den B-Zustand übergeführt wird.

5. Verfahren nach einem der Ansprüche 1 bis 4, daß auf beide Frontseiten einer als Basis eingesetzten elektrisch leitenden flächigen Struktur wie einer Folie, Platte oder eines Netzes jeweils eine der verformbaren Schichten aufgebracht und diese jeweils mit einer elektrisch leitenden Folie abgedeckt wird.

6. Verfahren nach einem der Ansprüche 1 bis 5, dadurch gekennzeichnet, daß als elektrisch leitende Folien, Platten, Netze oder sonstige flächige Strukturen solche aus Metall oder Metallegierungen eingesetzt werden.

7. Verfahren nach Anspruch 6, dadurch gekennzeichnet, daß als elektrisch leitende Folien, Platten, Netze oder sonstige flächige Strukturen solche aus Eisen, Kupfer oder Aluminium oder aus jeweils zumindest eines dieser Metalle enthaltenden Legierungen eingesetzt werden.

8. Verfahren nach einem der Ansprüche 1 bis 7, dadurch gekennzeichnet, daß die Bindemittelzubereitung in Form eines Sinterpulvers eingesetzt wird.

9. Verfahren nach einem der Ansprüche 1 bis 7, dadurch
gekennzeichnet, daß die Bindemittelzubereitung in
Form eines flüssigen duroplastischen Kunststoffes
eingesetzt wird.

10. Verfahren nach einem der Ansprüche 1 bis 7, dadurch
gekennzeichnet, daß die Bindemittelzubereitung in
Form einer Kunststofflösung eingesetzt wird.

11. Verfahren nach einem der Ansprüche 1 bis 7, dadurch
gekennzeichnet, daß die Bindemittelzubereitung in Form
einer Kunststoffdispersion eingesetzt wird.

12. Verfahren nach einem der Ansprüche 2 bis 11, dadurch
gekennzeichnet, daß als elektrisch leitfähiges, mit
der Bindemittelzubereitung zu vermengendes Material
Metallpulver eingesetzt wird.

Europäisches
Patentamt

**EUROPÄISCHER RECHERCHENBERICHT**

Nummer der Anmeldung

EP 79 10 1095

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | B 29 C 1/02 |
| X | DE - A - 1 779 419 (SCHMIDT) <br> * Seite 7, Zeile 25 bis Seite 8, Zeile 2; Seite 10, Zeilen 4-21; Figur 2 * <br><br> -- | 1-7 | |
| | FR - A - 2 185 486 (KURARAY) <br> * Ansprüche 3,5,8 * <br><br> -- | 1, 12 | |
| A | FR - A - 1 246 804 (TANINS REY) <br> * Seite 5, Absatz 2 * <br><br> -- | 1 | RECHERCHIERTE SACHGEBIETE (Int. Cl.²) <br><br> B 29 C |
| A | DE - A - 2 133 537 (KOHLER) <br> * Patentanspruch 1; Figuren 1-4 * <br><br> ---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-07-1979 | SCHMIDL |